Europäisches Patentamt

European Patent Office

Office européen des brevets

(19)

(11) EP 0 677 918 B1

(12) FASCICULE DE BREVET EUROPEEN

(45) Date de publication et mention
de la délivrance du brevet:
**16.09.1998 Bulletin 1998/38**

(51) Int Cl.⁶: **H02P 1/26**

(21) Numéro de dépôt: 95400773.8

(22) Date de dépôt: 07.04.1995

(54) **Procédé et dispositif d'alimentation d'un moteur électrique polyphasé, en phase de démarrage**

Verfahren und Vorrichtung zur Stromversorgung eines mehrphasigen elektrischen Motors in der Startphase

Method and device for supplying power to a polyphase electric motor in the starting phase

(84) Etats contractants désignés:
**BE DE ES FR GB IT NL SE**

(30) Priorité: **15.04.1994 FR 9404490**

(43) Date de publication de la demande:
**18.10.1995 Bulletin 1995/42**

(73) Titulaire: **L'AIR LIQUIDE, SOCIETE ANONYME POUR
L'ETUDE ET L'EXPLOITATION DES PROCEDES
GEORGES CLAUDE
75321 Paris Cédex 07 (FR)**

(72) Inventeurs:
• **Vezinet, Marc
F-91230 Mongeron (FR)**
• **Mourier, Serge
F-93330 Neuilly sur Marne (FR)**

(74) Mandataire: **Le Moenner, Gabriel et al
L'Air Liquide S.A.,
DSPI,
Service Brevets et Marques,
75 Quai d'Orsay
75321 Paris Cedex 07 (FR)**

(56) Documents cités:
**DE-A- 3 739 047**

• **ELEKTRISCHE BAHNEN., vol. 90, MUNCHEN DE, page 130 H. ILLMER 'Die elektrische Ausrüstung der Triebzüge Baureihe 2300 mit Drehstromantriebstechnik für die Portugiesische Staatsbahn'**
• **PATENT ABSTRACTS OF JAPAN vol. 15 no. 365 (E-1111) ,13 Septembre 1991 & JP-A-03 143281 (EKON KK) 18 Juin 1991,**
• **PATENT ABSTRACTS OF JAPAN vol. 8 no. 107 (E-245) ,19 Mai 1984 & JP-A-59 021298 (TOKYO SHIBAURA DENKI K.K.) 3 Février 1984,**

## Description

La présente invention est relative à un procédé et à un dispositif d'alimentation d'un moteur électrique polyphasé, en phase de démarrage, à travers un transformateur débitant sur un jeu de barres auxquelles sont connectés le moteur et d'autres consommateurs d'énergie électrique, ledit moteur absorbant à lui seul une puissance active supérieure ou égale à 20% de la puissance électrique installée.

On emploie couramment dans l'industrie des unités de séparation de gaz qui servent à alimenter des ateliers avec divers fluides tels que de l'air comprimé, de l'oxygène, de l'argon, etc... Une telle unité comprend ordinairement un puissant moteur alimenté en courant triphasé et entraînant un compresseur d'air produisant de l'air comprimé à 8 bars par exemple, la séparation des gaz précités s'opérant ensuite en partant de cet air comprimé.

Un transformateur principal alimenté par le réseau débite sur un jeu de barres auquel le moteur est connecté, de même que d'autres consommateurs d'énergie électrique installés dans l'atelier concerné. Du fait de sa puissance, couramment de l'ordre de 20 MW, le moteur d'entraînement du compresseur consomme une part importante de la puissance disponible à la sortie du transformateur, supérieure à 20% de cette puissance et atteignant souvent 50% ou plus.

On conçoit que le démarrage d'un tel moteur cause des problèmes, notamment lorsque le réseau d'alimentation présente une puissance de court-circuit faible. Dans cette hypothèse, le démarrage du moteur peut réduire la tension disponible sur le jeu de barres à un niveau tel (par exemple inférieur de 15% au moins à la tension nominale) que le fonctionnement des autres consommateurs d'énergie en est empêché ou perturbé.

Par ailleurs, le temps de démarrage du moteur est fonction, notamment, de la somme des inerties des appareils qu'il entraîne et de la tension disponible à ses bornes. Au démarrage on observe alors un fort appel de courant pendant un temps proportionnel à la somme de ces inerties. Ce fort appel de courant provoque un dégagement de chaleur dans un système d'enroulements alors adiabatique, dégagement qu'il faut donc limiter en réduisant autant que possible le temps de démarrage, typiquement une valeur comprise entre 15 et 40 s.

Pour ce faire, deux techniques sont actuellement utilisées. Suivant la première, on régule à une valeur constante le rapport de la tension à la fréquence du courant fourni au moteur pendant une phase de démarrage, de manière qu'à tout instant le moteur reçoive seulement la puissance nécessaire à ce démarrage, sans échauffement donc. Malheureusement cette technique implique l'emploi d'une électronique de puissance lourde et coûteuse.

Suivant l'autre technique, le moteur est associé à un autotransformateur qui lui est propre, installé entre le transformateur principal et le moteur. En phase de démarrage, on alimente le moteur avec une tension réduite, prélevée sur l'autotransformateur, ce qui évite de perturber le fonctionnement des autres consommateurs connectés au jeu de barres, mais accroît la durée du démarrage jusqu'à des valeurs qui peuvent être prohibitives, du point de vue échauffement. Du fait de l'emploi d'un autotransformateur additionnel, cette solution présente d'autres inconvénients: elle est coûteuse, elle impose une chute de tension supplémentaire (dans l'autotransformateur) et enfin la puissance consommée pendant le démarrage n'est pas la puissance minimum nécessaire à celui-ci.

La présente invention a donc pour buts de proposer un procédé d'alimentation d'un moteur électrique polyphasé, en phase de démarrage, qui soit de mise en oeuvre peu coûteuse et qui n'engage que la consommation d'énergie juste nécessaire au démarrage du moteur.

On atteint ces buts de l'invention, ainsi que d'autres qui apparaîtront à la lecture de la description qui va suivre, avec un procédé d'alimentation d'un moteur électrique polyphasé, à travers un transformateur débitant sur un jeu de barres auxquels sont connectés le moteur et d'autres consommateurs d'énergie électrique, ledit moteur absorbant à lui seul une puissance active supérieure ou égale à 20% de la puissance électrique installée, ce procédé étant remarquable en ce que, pendant au moins une partie de la phase de démarrage du moteur, on alimente celui-ci avec des tensions réduites prélevées sur des prises intermédiaires des enroulements secondaires du transformateur.

Grâce à cette disposition, on fait l'économie de l'autotransformateur classiquement utilisé au démarrage.

Suivant une caractéristique avantageuse de la présente invention, le rapport de transformation à vide du transformateur, sur chaque prise intermédiaire, est choisi pour que les rapports de tension $U_b/U_a$ et $U_m/U_a$ soient tous deux supérieurs à des valeurs prédéterminées respectives, $U_b, U_m$ et $U_a$ étant respectivement la tension sur le jeu de barres pendant le démarrage, la tension aux bornes du moteur pendant le démarrage et la tension assignée à partir de laquelle sont établies les performances du moteur et des consommateurs d'énergie électrique. Comme on le verra plus loin, on arrive ainsi à limiter la chute de tension observée sur le jeu de barres de manière à ne pas perturber le fonctionnement des autres consommateurs électriques, tout en assurant l'alimentation du moteur avec une tension suffisante pour surmonter les inerties agissant sur son arbre de sortie en un temps assez réduit pour éviter tout problème d'échauffement.

Dans certains cas pratiques extrêmes, le procédé selon l'invention, tel que précédemment décrit devra encore être perfectionné.

Il s'agit par exemple des cas où le réseau a des caractéristiques très inadaptées au démarrage du moteur (c'est le cas d'une puissance de court-circuit faible ou d'une chute de tension autorisée faible) ou encore lorsque la machine entraînée par le moteur est extrêmement exigeante (c'est le cas de machines entraînées ayant un moment d'inertie et/ou couple résistant élevés).

Il sera alors particulièrement avantageux d'associer au moins un appareil auxiliaire de lancement pneumatique (constitué par exemple par une turbine à gaz), qui fournit au moteur une énergie directement sous forme mécanique, provenant de la détente d'un fluide sous pression typiquement un gaz.

Ce gaz pourra être par exemple de l'air, de l'azote, mais également tout autre gaz adapté qu'une installation industrielle peut envisager de stocker. La forme sous laquelle ce gaz est stocké est alors indifférente, liquide ou gazeuse.

Cet appareil auxiliaire de lancement pneumatique sera alors mis en oeuvre seul durant une première partie de la phase de démarrage, permettant d'amener la vitesse du moteur jusqu'à un certain pourcentage X% de sa vitesse nominale.

On doit donc entendre par cela le fait que durant cette première partie de la phase de démarrage, le moteur n'est alimenté que via l'appareil auxiliaire.

Durant le reste de la phase de démarrage (seconde partie) donc jusqu'à la vitesse nominale, on alimentera le moteur à travers un transformateur par le procédé selon l'invention déjà décrit plus haut (tensions réduites prélevées sur des prises intermédiaires du transformateur).

Selon l'une des mises en oeuvre de l'invention, durant la seconde partie de la phase de démarrage, le moteur est alimenté par l'apport combiné d'énergie provenant de l'appareil auxiliaire et du transformateur, ce qui revient à laisser en service l'appareil auxiliaire durant toute la durée de la phase de démarrage.

Comme il apparaîtra clairement à l'homme du métier, l'appareil auxiliaire de lancement selon l'invention pourra comprendre plusieurs appareils de lancement élémentaires, selon les performances requises.

L'invention propose également un dispositif d'alimentation pour la mise en oeuvre du procédé suivant l'invention, comprenant des premières lignes d'alimentation raccordant le moteur aux bornes des enroulements secondaires du transformateur, ce dispositif étant remarquable en ce qu'il comprend des deuxièmes lignes d'alimentation du moteur par des prises intermédiaires de ces enroulements et des moyens de commutation pour connecter sélectivement ces prises intermédiaires au moteur par les deuxièmes lignes et pour couper les premières lignes, pendant au moins une partie de la phase de démarrage du moteur.

D'autres caractéristiques et avantages de la présente invention apparaîtront à la lecture de la description qui va suivre et à l'examen du dessin annexé dans lequel :

- la figure 1 est un schéma du dispositif d'alimentation suivant l'invention, et
- la figure 2 est un schéma électrique équivalent du dispositif de la figure 1, utile à la description du procédé suivant l'invention.

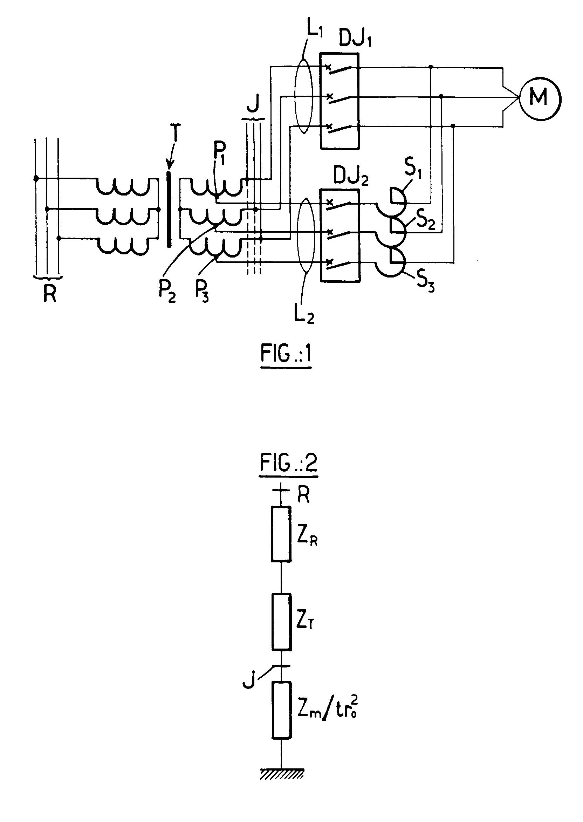

On se réfère à la figure 1 du dessin annexé où il apparaît que le dispositif d'alimentation suivant l'invention est alimenté, en courant triphasé par exemple, par un réseau R de distribution d'énergie électrique. Les enroulements primaires d'un transformateur principal T sont raccordés au réseau R et les enroulements secondaires de ce transformateur débitent du courant sur un jeu de barres J auxquelles sont connectés divers consommateurs d'énergie électrique (non représentés) tels qu'on en trouve dans des ateliers ou autres locaux industriels, et un moteur M tel que celui décrit en préambule de la présente description, pour l'entraînement d'un compresseur d'air par exemple. Comme on l'a vu plus haut, la présente invention trouve plus particulièrement application quand le moteur M absorbe une partie importante de la puissance totale de l'installation, soit plus de 20 % de cette puissance par exemple, comme c'est le cas quand le moteur entraîne un compresseur d'air formant partie d'une unité de séparation de gaz exploités dans les locaux industriels où sont installés les autres consommateurs électriques.

En régime permanent, le moteur M est alimenté directement par le jeu de barres J, par l'intermédiaire d'un jeu $L_1$ de premières lignes. Des moyens de commutation $DJ_1$, constitués par exemple par un triple disjoncteur, sont prévus sur les lignes du jeu $L_1$. Un démarrage direct du moteur avec une telle alimentation présenterait tous les inconvénients mentionnés plus haut quant à la perturbation du fonctionnement des autres consommateurs électriques raccordés au jeu de barres J.

Suivant la présente invention, on évite d'avoir recours aux moyens coûteux utilisés dans la technique antérieure pour pallier ces inconvénients, en alimentant le moteur M, pendant tout ou partie de la phase de démarrage, avec des tensions réduites prélevées sur des prises intermédiaires $(P_1, P_2, P_3)$ des enroulements secondaires du transformateur principal T lui-même. Il est clair que ce procédé d'alimentation est particulièrement économique puisqu'il fait seulement appel à un jeu de deuxièmes lignes $L_2$ permettant de raccorder sélectivement, en phase de démarrage, le moteur M auxdites prises intermédiaires du transformateur T.

Il est clair que la position des prises supplémentaires $(P_1, P_2, P_3)$ sur les enroulements secondaires du transformateur T doit être choisie de manière que le démarrage du moteur alimenté par ces prises ne fasse pas chuter la tension sur le jeu de barres en dessous d'une valeur qui empêcherait le fonctionnement des autres consommateurs électriques, prévus pour fonctionner normalement à une tension assignée $U_a$. En désignant par $U_b$ la tension sur le jeu de barres en phase de démarrage, cette contrainte s'exprime par la relation :

$$U_b/U_a > k$$

k étant une constante.

Si, comme cela est courant, les consommateurs sont prévus pour fonctionner en présence d'une chute de tension d'alimentation de 15% maximum, on peut choisir k = 0,85.

Cette contrainte permet d'établir une première relation faisant intervenir le rapport de transformation à vide $tr_0$ du transformateur T lorsqu'il débite sur les prises intermédiaires $P_1,P_2,P_3$. En effet, si on se réfère au schéma électrique équivalent représenté à la figure 2, où $Z_R$, $Z_T,Z_m$ sont respectivement les impédances du réseau, du transformateur T et du moteur en phase de démarrage, on peut écrire :

$$U_b/U_a=(Z_m/\,tr_0^2)/(Z_R + Z_T + Z_m/\,tr_0^2) \qquad (1)$$

ce qui pose une première contrainte sur la valeur de $tr_0$ et donc sur la position des prises intermédiaires que le concepteur doit déterminer.

Par ailleurs, pour limiter la durée du temps de démarrage du moteur, et donc son échauffement, il faut que la tension $U_m$ qui lui est appliquée en phase de démarrage soit supérieure à une valeur prédéterminée, en dessous de laquelle le temps mis pour vaincre les inerties freinant son arbre de sortie est considéré comme trop important. Cette contrainte s'exprime par la relation :

$$Um/Ua = \frac{Ub.tro}{Ua} > K' \qquad (2)$$

k' étant une constante. A titre d'exemple, on peut choisir k' = 0,65.

Il reste au concepteur à déterminer, par des essais successifs, quelles valeurs de $tr_0$ satisfont à la fois aux relations (1) et (2) ci-dessus. Le concepteur peut essayer par exemple des valeurs de $tr_0$ comprises entre 0,55 et 0,75 et, préférablement, entre 0,6 et 0,65.

Le démarrage du moteur suivant le procédé selon l'invention s'opère alors comme suit, dans le cas d'une phase de démarrage s'effectuant purement au travers du transformateur (sans intervention d'un appareil auxiliaire). Comme représenté à la figure 1, des moyens de commutation constitués par un triple disjoncteur $DJ_2$ sont prévus sur les lignes du jeu $L_2$. Au démarrage, on ferme ce triple disjoncteur alors que le disjoncteur $DJ_1$ est ouvert. Une temporisation ou une détermination tachymétrique de la vitesse du moteur M commande ensuite séquentiellement l'ouverture de $DJ_2$ et la fermeture de $DJ_1$ pour établir l'alimentation en régime permanent du moteur. Ceci suppose que la ligne d'arbre entraînée par le moteur M peut supporter un creux de tension limitée, de 100 ms par exemple.

Si tel n'est pas le cas, à la fin de la phase de démarrage, le disjoncteur $DJ_1$ se ferme avant que $DJ_2$ ne s'ouvre. On peut alors prévoir sur les deuxièmes lignes du jeu $L_2$ un jeu d'inductances $S_1,S_2,S_3$ pour limiter le courant de court-circuit dans ces lignes puisqu'alors une partie des enroulements secondaires débitent du courant dans ces inductances. La fermeture de $DJ_1$ commande l'ouverture de $DJ_2$ et l'accélération du moteur se poursuit jusqu'à ce que la vitesse nominale soit atteinte.

Il apparaît maintenant que la présente invention apporte bien les avantages annoncés. Il est à noter en outre que l'invention n'utilisant pas d'autotransformateur, permet de ne pas affecter la puissance de court-circuit du réseau, ce qui est particulièrement avantageux quand celle-ci est relativement faible, puisqu'une puissance du court-circuit insuffisante peut rendre le démarrage du moteur impossible. L'invention permet en outre d'assurer le démarrage du moteur avec une dépense d'énergie minimum.

Dans une installation où la puissance du court-circuit est faible, un autotransformateur de démarrage classique doit présenter des caractéristiques voisines de celles du transformateur principal pour limiter la chute de puissance de court-circuit du réseau et la chute de tension due à son impédance pendant le démarrage. La présente invention permet d'économiser le coût élevé d'un tel autotransformateur.

**Revendications**

1.  Procédé d'alimentation d'un moteur électrique polyphasé, à travers un transformateur (T) débitant sur un jeu de barres (J) auxquelles sont connectées le moteur (M) et d'autres consommateurs d'énergie électrique, ledit moteur absorbant à lui seul une puissance active supérieure ou égale à 20% de la puissance électrique installée, caractérisé en ce que, pendant au moins une partie de la phase de démarrage du moteur, on alimente celui-ci avec des tensions réduites prélevées sur des prises intermédiaires ($P_1,P_2,P_3$) des enroulements secondaires du transformateur.

2.  Procédé conforme à la revendication 1, caractérisé en ce que le rapport de transformation à vide ($tr_0$) du transformateur sur chaque prise intermédiaire est choisi pour que les rapports de tension $U_b/U_a$ et $U_m/U_a$ soient tous deux supérieurs à des valeurs prédéterminées respectives, $U_b$, $U_m$ et $U_a$ étant respectivement la tension sur le jeu de barres pendant le démarrage, la tension aux bornes du moteur pendant le démarrage et la tension assignée à partir de laquelle sont établies les performances du moteur et des consommateurs d'énergie.

3.  Procédé conforme à la revendication 2, caractérisé en ce que lesdits rapports sont choisis tels que :

$$U_b/U_a > 0,85$$

$$U_m/U_a > 0,65$$

**4.** Procédé selon l'une des revendications 1 à 3, caractérisé en ce que le moteur est alimenté à travers ledit transformateur durant une seconde partie de la phase de démarrage, et en ce que durant une première partie de la phase de démarrage antérieure à la seconde partie, le moteur est entraîné par au moins un appareil auxiliaire actionné par un fluide sous pression.

**5.** Procédé selon la revendication 4, caractérisé en ce que la vitesse du moteur à la fin de ladite première partie est comprise entre 20 et 50% de sa vitesse nominale.

**6.** Procédé selon la revendication 4 ou 5, caractérisé en ce que durant ladite seconde partie de la phase de démarrage, le moteur est alimenté exclusivement au travers dudit transformateur.

**7.** Procédé selon la revendication 4 ou 5, caractérisé en ce que durant ladite seconde partie de la phase de démarrage, le moteur est alimenté par l'apport combiné d'énergie provenant dudit transformateur et dudit appareil auxiliaire.

**8.** Dispositif d'alimentation pour la mise en oeuvre du procédé conforme à l'une quelconque des revendications 1 à 7, comprenant des premières lignes d'alimentation ($L_1$) raccordant le moteur (M) aux bornes des enroulements secondaires du transformateur (T), caractérisé en ce qu'il comprend des deuxièmes lignes d'alimentation ($L_2$) du moteur par des prises intermédiaires ($P_1,P_2,P_3$) de ces enroulements et des moyens de commutation ($DJ_1,DJ_2$) pour connecter sélectivement ces prises intermédiaires au moteur (M) par les deuxièmes lignes ($L_2$) et pour couper les premières lignes ($L_1$), pendant au moins une partie d'une phase de démarrage du moteur.

**9.** Dispositif conforme à la revendication 8, caractérisé en ce que les moyens de commutation ($DJ_2$) placés sur les deuxièmes lignes s'ouvrent après la fermeture des moyens de commutation ($DJ_1$) placés sur les premières lignes, à la fin de la phase de démarrage du moteur.

**10.** Dispositif conforme à la revendication 9, caractérisé en ce qu'il comprend des inductances ($S_1,S_2,S_3$) de limitation de courant de court-circuit disposées en série avec les moyens de commutation ($DJ_2$) placés sur les deuxièmes lignes ($L_2$).

**11.** Dispositif conforme à l'une des revendications 8 à 10, caractérisé en ce qu'il comprend au moins un appareil auxiliaire d'entraînement du moteur.

**12.** Dispositif selon la revendication 11, caractérisé en ce que ledit appareil auxiliaire est une turbine à gaz ayant un arbre de sortie couplé à l'arbre du moteur via un dispositif d'embrayage.

**Patentansprüche**

**1.** Verfahren zur Versorgung eines Zweiphasenelektromotors über einen Transformator (T) mit Ausgang auf ein Stangenspiel (J), an das der Motor (M) und andere elektrische Verbraucher angeschlossen sind, wobei der genannte Motor alleine eine aktive Leistung von gleich oder mehr als 20% der angeschlossenen elektrischen Leistung verbraucht, dadurch gekennzeichnet, daß während mindestens eines Abschnitts der Startphase des Motors dieser mit reduzierten Spannungen versorgt wird, die von zwischengeschalteten Anschlüssen ($P_1$, $P_2$, $P_3$) der sekundären Wicklungen des Transformators entnommen werden.

**2.** Verfahren nach Anspruch 1, dadurch gekennzeichnet, daß das unbelastete Transformationsverhältnis ($tr_0$) des Transformators auf jedem zwischengeschalteten Anschluß so gewählt ist, daß die Spannungsverhältnisse $U_b/U_a$ und $U_m/U_a$ beide über jeweils voreingestellten Werten liegen, wobei $U_b$, $U_m$ und $U_a$ jeweils der Spannung auf dem Stangenspiel während des Starts, der Spannung an den Anschlußklemmen des Motors während des Starts und der zugewiesenen Spannung entsprechen, von der ausgehend die Leistungen des Motors und der Verbraucher errichtet werden.

**3.** Verfahren nach Anspruch 2, dadurch gekennzeichnet, daß die genannten Verhältnisse wie folgt gewählt werden:

$$U_b / U_a > 0,85$$

$$U_m / U_a > 0,65$$

**4.** Verfahren nach einem der Ansprüche 1 bis 3, dadurch gekennzeichnet, daß der Motor über den genannten Transformator während eines zweiten Abschnitts der Startphase versorgt wird, und dadurch, daß während eines ersten Abschnitts der Startphase, die vor dem zweiten Abschnitt liegt, der Motor durch mindestens ein Hilfsgerät angetrieben wird, welches durch eine Druckflüssigkeit betrieben wird.

**5.** Verfahren nach Anspruch 4, dadurch gekennzeichnet, daß die Motordrehzahl am Ende des genannten ersten Abschnitts zwischen 20 und 50 % seiner Nenndrehzahl liegt.

**6.** Verfahren nach Anspruch 4 oder 5, dadurch gekennzeichnet, daß während des genannten zweiten Abschnitts der Startphase der Motor ausschließlich über den genannten Transformator versorgt wird.

**7.** Verfahren nach Anspruch 4 oder 5, dadurch gekennzeichnet, daß während des genannten zweiten Abschnitts der Startphase der Motor durch die kombinierte Zuführung von Energie aus dem genannten Transformator und aus dem genannten Hilfsgerät versorgt wird.

**8.** Versorgungsvorrichtung für die Durchführung des Verfahrens nach einem der Ansprüche 1 bis 7, die erste Zuleitungen ($L_1$) umfaßt, die den Motor (M) mit den Anschlußklemmen der sekundären Wicklungen des Transformators (T) verbinden, dadurch gekennzeichnet, daß sie zweite Leitungen ($L_2$) für die Versorgung des Motors durch zwischengeschaltete Anschlüsse ($P_1$, $P_2$, $P_3$) dieser Wicklungen und Mittel zur Kommutation ($DJ_1$, $DJ_2$) enthält, um selektiv diese zwischengeschalteten Anschlüsse an den Motor (M) durch die zweiten Leitungen ($L_2$) anzuschließen und um die ersten Leitungen ($L_1$) während mindestens eines Abschnitts einer Startphase des Motors abzuschalten.

**9.** Vorrichtung nach Anspruch 8, dadurch gekennzeichnet, daß die Mittel zur Kommutation ($DJ_2$) auf den zweiten Leitungen sich nach dem Verschließen der Mittel zur Kommutation ($DJ_1$) auf den ersten Leitungen am Ende der Startphase des Motors öffnen.

**10.** Vorrichtung nach Anspruch 9, dadurch gekennzeichnet, daß sie Strombegrenzungsdrosseln ($S_1$, $S_2$, $S_3$) für den Kurzschluß enthält, die mit den Mitteln zur Kommutation ($DJ_2$) auf den zweiten Leitungen ($L_2$) in Reihe geschaltet sind.

**11.** Vorrichtung nach einem der Ansprüche 8 bis 10, dadurch gekennzeichnet, daß sie mindestens ein Hilfsgerät für den Antrieb des Motors umfaßt.

**12.** Vorrichtung nach Anspruch 11, dadurch gekennzeichnet, daß das genannte Hilfsgerät eine Gasturbine mit einer Ausgangswelle ist, die über eine Kupplungsvorrichtung an die Motorwelle gekoppelt ist.

## Claims

**1.** Method of supplying power to a multiphase electric motor, through a transformer (T) feeding a set of bus bars (J) to which the motor (M) and other consumers of electrical energy are connected, the said motor by itself absorbing active power greater than or equal to 20% of the installed electrical power, characterized in that, during at least a part of the motor start-up phase, the motor is supplied with reduced voltages picked off on intermediate tappings ($P_1$, $P_2$, $P_3$) of the secondary windings of the transformer.

**2.** Method according to Claim 1, characterized in that the off-load transformer ratio ($tr_0$) of the transformer on each intermediate tapping is chosen so that the voltage ratios $U_b/U_a$ and $U_m/U_a$ are both higher than respective predetermined values, $U_b$, $U_m$ and $U_a$ being respectively the voltage on the set of bus bars during the start-up, the voltage at the terminals of the motor during the start-up and the rated voltage on the basis of which the performance of the motor and of the energy consumers is established.

**3.** Method according to Claim 2, characterized in that the said ratios are chosen such that:

$$U_b/U_a > 0.85$$

$$U_m/U_a > 0.65$$

**4.** Method according to one of Claims 1 to 3, characterized in that the motor is supplied with power through the said transformer during a second part of the start-up phase, and in that during a first part of the start-up phase, before the second part, the motor is driven by at least one auxiliary apparatus actuated by a pressurized fluid.

**5.** Method according to Claim 4, characterized in that the speed of the motor at the end of the said first part lies between 20 and 50% of its nominal speed.

**6.** Method according to Claim 4 or 5, characterized in that, during the said second part of the start-up phase, the motor is supplied with power exclusively through the said transformer.

**7.** Method according to Claim 4 or 5, characterized in that, during the said second part of the start-up phase, the motor is supplied with power via the combined contribution of the energy originating from the said transformer and from the said auxiliary apparatus.

**8.** Power supply device for implementing the method according to any one of Claims 1 to 7, comprising first power supply lines ($L_1$) connecting the motor (M) to the terminals of the secondary windings of the transformer (T), characterized in that it comprises second lines ($L_2$) for supplying power to the motor via intermediate tappings ($P_1, P_2, P_3$) of these windings and switching means ($DJ_1$, $DJ_2$) for selectively connecting these intermediate tappings to the motor (M) via the second lines ($L_2$) and for cutting off the first lines ($L_1$), during at least a part of a motor start-up phase.

9. Device according to Claim 8, characterized in that the switching means ($DJ_2$) placed on the second lines are opened after the switching means ($DJ_1$) placed on the first lines are closed, at the end of the motor start-up phase.

10. Device according to Claim 9, characterized in that it comprises inductors ($S_1$, $S_2$, $S_3$) for limiting short-circuit current, which are arranged in series with the switching means ($DJ_2$) placed on the second lines ($L_2$).

11. Device according to one of Claims 8 to 10, characterized in that it comprises at least one auxiliary apparatus for driving the motor.

12. Device according to Claim 11, characterized in that the said auxiliary apparatus is a gas turbine having an output shaft coupled to the shaft of the motor via a clutch device.

FIG.:1

FIG.:2

$$Z_R$$

$$Z_T$$

$$Z_m/tr_o^2$$